# EUROPÄISCHE PATENTSCHRIFT

(11) **EP 1 908 433 B1**
(45) Veröffentlichungstag und Bekanntmachung des Hinweises auf die Patenterteilung: **16.01.2013**
(21) Anmeldenummer: 07019420.4
(22) Anmeldetag: 04.10.2007
(51) Int. Cl.: A61C 13/00, A61C 13/083

(54) **Brückengerüst als Zahnersatz**
Bridge framework as a dental prosthesis
Structure de bridge en tant que prothèse dentaire

(30) Priorität: 06.10.2006 DE 102006047341
(43) Veröffentlichungstag der Anmeldung: 09.04.2008
(73) Patentinhaber: DCM GmbH, 18055 Rostock (DE)
(72) Erfinder: Zothner, Aurica, 18055 Rostock (DE)
(74) Vertreter: Hansmann, Dierk

(56) Entgegenhaltungen:
- DE-A1- 3 930 358
- DE-A1- 10 248 629
- DE-A1- 19 835 778

## Beschreibung

Die Erfindung bezieht sich auf ein Brückengerüst für einen Zahnersatz in Form einer großspannigen Brücke aus einem keramischen Werkstoff auf der Basis von Zirkondioxid, bestehend aus einem Primärteil und einem mit diesem verbundenen Sekundärteil, wobei die Verbindung zwischen dem Primärteil und dem Sekundärteil über ein verbindungselement gebildet ist und die zu verbindenden Teile als korrespondierende Formteile in Gestalt einer Patrize und einer Matrize ausgebildet sind und wobei das Brückengerüst auf präparierte zahnstümpfe aufsetzbar ist. Ferner bezieht sich die Erfindung auf ein Verfahren zur Herstellung eines solchen Brückengerüstes.

Im Bereich der Dentaltechnik erlangt der keramische Werkstoff zirkondioxid aufgrund seiner hervorragenden mechanischen Eigenschaften, wie der hohen Biegefestigkeit und Härte, sowie aufgrund seiner exzellenten Biokompatibilität zunehmende Bedeutung als Metallersatz. Seine Farbe und seine biotechnischen Eigenschaften ermöglichen die Herstellung von hochwertigen ästethischen Dentalkomponenten, wie Kronen und Brückenkonstruktionen. Es besteht allerdings in der Praxis die Schwierigkeit, daß die Fertigung großspanniger Brückengerüste und Brückenkonstruktionen aus Zirkondioxid-Keramik bisher nur mittels relativ aufwendiger CAD/CAM-Anlagen erfolgen kann. Nur diese sind geeignet, Komponenten mit hinreichend großen Abmessungen in einem Stück aus einem entsprechenden Keramikrohling zu fertigen. Hinzu kommt, daß Rohlinge in einer Größe, die für die Fertigung solcher Komponenten erforderlich ist, relativ kostspielig sind und nur bedingt zur Verfügung stehen.

Es besteht daher das Bestreben, mehrgliedrige Brückengerüste aus mehreren einzelnen Komponenten zu fertigen, die jeweils zunächst einzeln aus entsprechend dimensionierten Keramikrohlingen hergestellt werden können, die eine wesentlich geringere Ausgangsgröße aufweisen müssen und deren Bearbeitung deshalb auch auf in herkömmlichen Zahntechniklaboren vorhandenen Bearbeitungseinrichtungen möglich ist. Ein derartiges Brüchengerüst ist beispielsverse aus der DE-A-3930 358 bekannt.

Aus der DE 102 48 629 A1 ist ein Brückengerüst der eingangs genannten Art aus einem keramischen Werkstoff, insbesondere aus Zirkonoxid, sowie ein Verfahren zu dessen Herstellung bekannt geworden, wobei das derart hergestellte Brückengerüst auch auf Zahnstümpfe aufsetzbar sein soll, die nicht parallel zueinander stehen. Zu diesem Zweck ist bei diesem bekannten Brückengerüst, dessen Länge größer ist als die üblicherweise zur Verfügung stehenden Keramik-Rohlinge, vorgesehen, daß es aus zumindest zwei Geschiebekomponenten in Form einer Matrize und einer Patrize besteht und daß diese beiden Komponenten nach dem Aufsetzen auf die jeweils zugeordneten und entsprechend vorbereiteten Zahnstümpfe miteinander verklebt werden. Hierzu verläuft zwischen der Matrize und der Patrize ein definierter Spalt, in den ein Bindemittel, wie Zement oder Klebstoff, eingebracht wird, um die Matrize mit der Patrize zu verbinden.

Daneben ist es bereits bekannt, bei der Verbindung von aus Keramik gefertigten Primär- und Sekundärteilen zu einem Brückengerüst das Primärteil mit einem Ansatz in Form eines sogenannten Geschiebes, beispielsweise eines Schroederzapfens, zu versehen, der über einen Steg einstöckig an das Primärteil angeformt ist und auf den das Sekundärteil im wesentlichen vertikal aufgeschoben wird.

Ferner ist in der DE 198 35 778 A1 eine Verankerung für einen herausnehmbaren Zahnersatz mit einem Brückengerüst beschrieben, bei dem eine fest verbindbare Patrize und eine von dieser lösbare Matrize miteinander korrespondierende Oberflächen aufweisen, jedoch werden bei dieser bekannten Anordnung Patrize und Matrize nicht dauerhaft miteinander verbunden.

In diesen bekannten Fällen stellt sich das Problem, eine ausreichende Bruchfestigkeit eines so hergestellten Brückengerüstes, insbesondere bei punktförmigen Druck- und Kerbbelastungen auf den mittleren Bereich der Brücke, sicherzustellen.

Aufgabe der Erfindung ist es, ein Brückengerüst der eingangs genannten Art so auszubilden, daß es auch stärkeren Druckkräften, die auf den verbindungsbereich einwirken, widersteht, ohne vorzeitig zu versagen, und daß es zugleich geeignet ist, sowohl im Seitenzahnbereich als auch im Frontzahnbereich eingesetzt zu werden. Weiterhin soll durch die Erfindung ein Verfahren zur Herstellung eines solchen Brückengerüstes angegeben werden.

Die Lösung der ersten Aufgabe erfolgt erfindungsgemäß dadurch, daß nach dem Zusammenfügen der miteinander zu verbindenden Teile aus einem Zirkondioxidwerkstoff in einem Brückenglied ein innenliegender umschlossener zentraler Bereich mit einer stoffschlüssigen Verbindung zwischen dem Primärteil und dem Sekundärteil gebildet ist, wobei die Verbindung über ein in einem keramischen Brand verfestigbares Keramiklot gebildet ist.

Durch die erfindungsgemäße Ausbildung des Brückengerüstes wird ein keramikgerechtes Design ermöglicht. Da das Fügen in einem Brückenglied über ein beim keramischen Brand der Brücke als Ganzes verfestigendes Keramiklot erfolgt und zu einer stoffschlüssigen Verbindung von Primär- und Sekundärteil miteinander führt, widersteht das Brückengerüst nach der Erfindung auch erhöhtem Druck dadurch, daß bei punktförmigen Beanspruchungen auf den mittleren Brückenbereich die einwirkenden Zug- und Biegekräfte auf benachbarte Verankerungselemente, wie Kronen oder Teilkronen, umgeleitet werden. Auf diese Weise ist eine weitgehende Reduktion von Biege- und Scherbeanspruchungen auf Werte, die das Verbundsystem als Ganzes nicht gefährden können, gewährleistet. Die Brückengerüste nach der Erfindung sind dabei mit den in zahntechnischen Laboren üblicherweise verfügbaren Mitteln und zugleich relativ einfach und preisgünstig herstellbar.

Eine günstige Ausbildung besteht darin, daß die Patrize eine obere Abschlußkante mit dem Matrizenbereich und einen unteren Auflagebereich mit einer zirkulären Hohlkehle zur Aufnahme der Matrize aufweist. Um eine schonende Krafteinleitung herbeizuführen und um scharfe Kanten zu vermeiden, wird zudem vorgeschlagen, daß die korrespondierenden Begrenzungen von Primär- und Sekundärteil als Abrundungen in Form von fließenden Übergängen ausgebildet sind. Dies ermöglicht zugleich ein optimales Einfließen des Klebers durch Kapillarkräfte in die miteinander zu verbindenden Bereiche. Auf diese Weise werden die optimalen Bedingungen für eine Anwendung des erfindungsgemäß vorgesehenen Keramiklotes zur Erzielung einer stoffschlüssigen Verbindung gewährleistet. Eine belastbare Ausbildung wird darüber hinaus insbesondere dadurch geschaffen, daß der Querschnitt der zwischen den Brückengliedern liegenden Verbindungselementen eine Flächengröße von wenigstens 9 mm² aufweist.

Weiterhin wird vorgeschlagen, daß das gesamte derart hergestellte Brückengerüst im gefügten Zustand verblendet wird. Das erfindungsgemäße Brückengerüst ist damit ohne Einschränkungen sowohl im Front- als auch im Seitenzahnbereich einsetzbar, unabhängig von der Größe und der Anzahl der erforderlichen Brückenglieder. Dabei besteht selbst bei einer geringen Anzahl von noch vorhandenen Pfeilerzähnen keine statische Einschränkung für die Gesamtkonstruktion, so daß nach dem erfindungsgemäß hergestellten zirkulären Brücken auch bei nur noch vier vorhandenen Pfeilerzähnen verwendet werden können.

Durch die Erfindung ist eine Kombination von kleinspannigen Brückenelementen zu großspannigen Restaurationen in Form einer horizontalen Erweiterung ebenso möglich wie eine vertikale Verlängerung bei nicht ausreichender Blankhöhe zur Gestaltung überdimensional langer Zähne. Bei den im Rahmen der Erfindung eingesetzten Werkstoffen kann es sich dabei sowohl um gesintertes Grünlingsmaterial als auch um heiß-isostatisch verpreßtes Zirkondioxid, sogenanntes HIP-Zirkon, handeln.

Nachfolgend soll die Erfindung anhand von in den Zeichnungen dargestellten Ausführungsbeispielen näher erläutert werden. Es zeigen:
- Fig. 1: eine Ausgangsposition zum Aufsetzen eines Brückengerüstes mit drei präparierten Stümpfen in einer ersten Ausführungsform,
- Fig. 2: die Anordnung gemäß Fig. 1 mit einem aufgesetzten Brückengerüst aus miteinander verbundenem Primärteil und Sekundärteil,
- Fig. 3: eine Prinzipdarstellung der zugeordneten zusammenzusetzenden Teile und die angedeutete Einschubbewegung der Anordnung gemäß Fig. 1,
- Fig. 4: einen Verbindungsbereich des Primärteils gemäß Fig. 3 mit einer Patrize in vergrößerter vestibulärer Darstellung,
- Fig. 5: eine Draufsicht oder okklusale Ansicht der Anordnung gemäß Fig. 4,
- Fig. 6: eine Draufsicht in Pfeilrichtung oder approximale Ansicht auf den verbindungsbereich der Anordnung gemäß Fig. 4 und
- Fig. 7: eine vergrößerte Schnittdarstellung des Verbindungsbereiches zwischen Primärteil und aufgesetztem Sekundärteil der Anordnung gemäß den Figuren 2 und 3 mit einem Klebespalt.

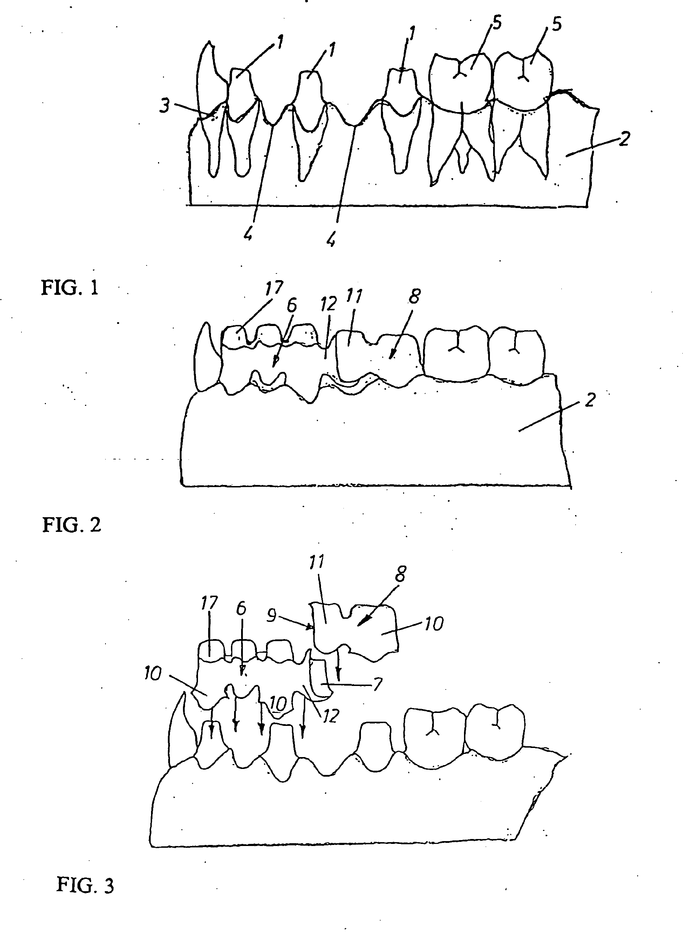

Die Darstellung gemäß Fig. 1 zeigt eine Ausgangssituation zur Aufnahme eines Brückengerüstes aus Keramik über präparierte Zahnstümpfe 1 mit einem die zahnwurzeln umgebenden Periodontium 2 und dem Zahnfleischsaum 3, mit Bereichen 4, in denen Zähne fehlen, sowie mit noch vorhandenen natürlichen Zähnen 5.

Ein zur versorgung dieser Situation vorgesehenes Brückengerüst besteht gemäß den Figuren 2 und 3 aus einem Primärteil 6 mit einem Verbindungsbereich als Patrize 7 und einem zugeordneten Sekundärteil 8 mit einer Matrize 9 als korrespondierendem verbindungsbereich. Hierbei sind Kronen 10 des Brückengerüstes den Zahnstümpfen 1 zugeordnet und durch Brückenglieder 11 über zwischen den Brückengliedern liegende angeformte Bereiche, sogenannte Verbindungselemente 12, miteinander verbunden. Der zu fügende Verbindungsbereich von Primärteil 6 und Sekundärteil 8 ist in einem Brückenglied 11 ausgebildet.

Die Patrize 7 als Teil des Brückengliedes 11 im Anschluß an den Verbinder 12 ist als konische Erweiterung in Einschubrichtung ausgebildet und besitzt Abrundungen mit fließenden Übergängen. Im oberen Bereich des Brückengliedes 11 mit der Patrize 7 ist eine abgesetzte Abschlußkante 13 für das aufzusetzende Sekundärteil 8 mit der Matrize 9 zur Bildung des Brückengliedes 11 ausgebildet. Die Matrize 9 wird dabei über einen unteren Auflagebereich 14 mit einer zirkulären Hohlkehle 15 der Patrize 7 aufgenommen. Hierbei wird ein Klebespalt 16 zwischen der Patrize 7 und der Matrize 9 gebildet, der das Keramiklot aufnimmt. Die Hohlkehle 15 bietet dabei nicht nur eine für das Fügen vergrößerte Oberfläche, sondern ergibt zugleich eine optimale Druckaufnahme.

Nach dem Einbringen des Keramiklotes in den Klebespalt 16 und dem Zusammenführen von Primärteil 6 und Sekundärteil 8 erfolgt das Fügen in einem keramischen Brand, bevor das Brückengerüst abschließend als Ganzes keramisch verblendet wird.

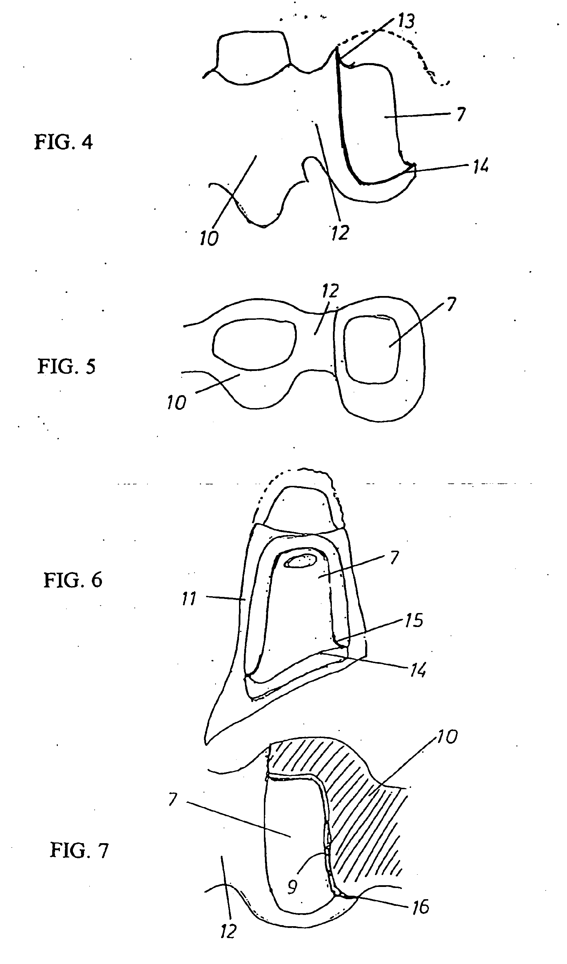

Durch die Umschließung der Patrize 7 durch die Matrize 9 wird eine große Auflagefläche für die Verbindung geschaffen, die eine optimale Druckverteilung ermöglicht. Ferner ist bei der in den Figuren 1 bis 7 dargestellten Ausführungsform am Primärteil 6 eine okklusale Aufmodellation 17 durch Verklebung mit dem heißaushärtenden Keramiklot vorgesehen.

Bei dem vorangehend beschriebenen Ausführungsbeispiel ist damit eine optimal formschlüssige und nach der erfolgten Verbindung durch das im keramischen Brand aushärtende Keramiklot insbesondere auch stoffschlüssige Verbindung von Primär- und Sekundärteil gegeben. Die dabei erzielbare Bruchfestigkeit in dem gefügten Brückenglied ist so hoch, daß die auf diese weise hergestellten Brückengerüste bei einer Bruchprüfung in einem Dreipunktbiegeversuch nicht an der Klebestelle, sondern im Bereich des nicht geklebten umgebenden vollmaterials versagen, wenn die Biegefestigkeit des für die Herstellung des Brückengerüstes verwendeten Zirkondioxids überschritten wird.

## Patentansprüche

1. Brückengerüst für einen Zahnersatz in Form einer großspannigen Brücke aus einem keramischen Werkstoff auf der Basis von Zirkondioxid, bestehend aus einem Primärteil (6) und einem mit diesem verbundenen Sekundärteil (8), wobei die Verbindung zwischen dem Primärteil und dem Sekundärteil über ein verbindungselement (12) gebildet ist und die zu verbindenden Teile als korrespondierende Formteile in Gestalt einer Patrize und einer Matrize ausgebildet sind und wobei das Brückengerüst auf präparierte Zahnstümpfe aufsetzbar ist, wobei nach dem Zusammenfügender miteinander zu verbindenden Teile aus einem Zirkondioxidwerkstoff in einem Brückenglied ein innenliegender umschlossener zentraler Bereich mit einer stoffschlüssigen Verbindung zwischen dem Primärteil (6) und dem Sekundärteil (8) gebildet ist, und wodei die Verbindung über ein in einem keramischen Brand verfestigbares Keramiklot gebildet ist.

2. Brückengerüst nach Anspruch 1, **dadurch gekennzeichnet, daß** das Primärteil (6) im verbindungsbereich als Matrize (7) ausgebildet ist und das Sekundärteil (8) die zugeordnete Patrize (9) aufweist, die auf die Matrize (7) in etwa vertikal aufschiebbar ist.

3. Brückengerüst nach Anspruch 2, **dadurch gekennzeichnet, daß** die Patrize als konische Erweiterung in Einschubrichtung ausgeformt ist und eine obere Abschlußkante (13) mit dem Matrizenbereich und einen unteren Auflagebereich (14) mit einer zirkulären Hohlkehle (15) zur Aufnahme der Matrize (9) aufweist.

4. Brückengerüst nach einem der Ansprüche 1 bis 3, **dadurch gekennzeichnet, daß** die korrespondierenden Begrenzungen von Patrize (7) und Matrize (9) als Abrundungen in Form von fließenden Übergängen ausgebildet sind.

5. Brückengerüst nach einem der Ansprüche 1 bis 4, **dadurch gekennzeichnet, daß** der Querschnitt des verbindungselementes (12) zwischen den Elementen der Brücke eine Flächengröße von wenigstens 9 mm² aufweist.

6. Brückengerüst nach einem der Ansprüche 1 bis 5, **dadurch gekennzeichnet, daß** das Brückengerüst in gefügtem Zustand keramisch verblendbar ist.

## Claims

1. Bridge framework for a dental prosthesis in the form of a long-span bridge made of a ceramic material based on zirconium dioxide, comprising a primary part (6) and a secondary part (8) connected thereto, wherein the connection between the primary part and the secondary part is formed by way of a connecting element (12) and the parts to be connected are configured as corresponding mouldings in the form of a male part and a female part, and wherein the bridge framework can be fitted to prepared tooth stumps, wherein, after the parts made of a zirconium dioxide material that are to be connected have been joined together in a bridge member, an internal enclosed central region with a material-bonded connection between the primary part (6) and the secondary part (8) is formed, and wherein the connection is formed by a ceramic solder which can be hardened by ceramic firing.

2. Bridge framework according to claim 1, **characterised in that** the primary part (6) in the connecting region is formed as the female part (7) and the secondary part (8) has the associated male part (9) which can be slipped onto the female part (7) approximately vertically.

3. Bridge framework according to claim 2, **characterised in that** the male part is formed as a conical widening in the insertion direction and has an upper border (13) with the female part region and a lower bearing region (14) with a circular channel (15) for receiving the female part (9).

4. Bridge framework according to any one of claims 1 to 3, **characterised in that** the corresponding boundaries of the male part (7) and of the female part (9) are configured as rounded areas in the form of smooth transitions.

5. Bridge framework according to any one of claims 1 to 4, **characterised in that** the cross-section of the connecting element (12) between the elements of the bridge has an area of at least 9 mm².

6. Bridge framework according to any one of claims 1 to 5, **characterised in that** the bridge framework in the joined state can be ceramically veneered.

## Revendications

1. Structure de bridge pour une prothèse dentale dentaire, qui présente la forme d'un bridge de grande étendue en matière céramique à base de dioxyde de zirconium, consistant en une partie primaire (6) et en une partie secondaire (8), qui sont reliées entre elles, sachant que la liaison entre la partie primaire et la partie secondaire est effectuée par l'intermédiaire d'un élément de liaison (12) et que les parties à relier sont réalisées en tant que pièces moulées correspondantes, sous la forme d'une pièce mâle et d'une pièce femelle, et sachant que la structure de bridge peut être mise en place sur des moignons de dents préparés, sachant que, après l'assemblage des pièces en dioxyde de zirconium, devant être reliées ensemble pour réaliser un élément de bridge, est formée une zone centrale, intérieure, enclose avec une liaison par fusion de matière, entre la partie primaire (6) et la partie secondaire (8), et sachant que la liaison est réalisée par une matière d'apport durcissable par cuisson pour céramique.

2. Structure de bridge selon la revendication 1, **caractérisée en ce que** la partie primaire (6) est formée dans la zone de liaison en tant que partie femelle (7) et que la partie secondaire (8) est dotée de la partie mâle (9) associée, qui peut être glissée à peu près verticalement sur la partie femelle (7).

3. Structure de bridge selon la revendication 2, **caractérisée en ce que** la partie femelle est réalisée sous la forme d' un évasement conique dans la direction d'enfichage et est dotée d'un bord supérieur de terminaison (13) avec la partie mâle et d'une zone de support (14) avec une gorge creuse circulaire (15) pour la réception de la partie mâle (9).

4. Structure de bridge selon l'une des revendications 1 à 3, **caractérisée en ce que** les limites correspondantes de la partie femelle (7) et de la partie mâle (9) sont réalisées en tant qu'arrondis pour former une transition progressive.

5. Structure de bridge selon l'une des revendications 1 à 4, **caractérisée en ce que** la section transversale de l'élément de liaison (12) entre les éléments du bridge a une surface d'au moins 9 mm².

6. Structure de bridge selon l'une des revendications 1 à 5, **caractérisée en ce que** la structure de bridge assemblée" est revêtue de céramique.
